# EUROPEAN PATENT APPLICATION

(11) **EP 4 163 490 A1**
(43) Date of publication of application: **12.04.2023**
(21) Application number: 21201132.4
(22) Date of filing: 06.10.2021
(51) Int. Cl.: F03D 7/02

(54) **WIND TURBINE YAW ASSEMBLY**

(71) Applicant: Siemens Gamesa Renewable Energy A/S, 7330 Brande (DK)
(72) Inventor: Damgaard, Steen, 7400 Herning (DK); Fogh, Helge, 6852 Billum (DK); Jensen, Daniel Kai, 7100 Vejle (DK); Nielsen, Rune, 7430 Ikast (DK)
(74) Representative: SGRE-Association

(57) **Abstract**

Wind turbine yaw assembly arranged at an interface between a nacelle (3) and a tower (2) of a wind turbine (1), comprising a yaw ring (10) with an annular arrangement of teeth (11) and at least one yaw drive unit (12) arranged at a support structure (8) and comprising a gear unit (13) and a connected rotatable pinion (14) arranged to engage with the teeth (11) of the yaw ring (10), wherein the support structure (8) is provided with a receptacle (16) for housing the pinion (14), wherein the pinion (14) arranged in the receptacle (16) is supported at the upper and at the lower end by at least two separate bearings (21, 22) arranged in distanced bearing planes towards the support structure (8).

## Description

The invention refers to a wind turbine yaw assembly arranged at an interface between a nacelle and a tower of a wind turbine, comprising a yaw ring with an annular arrangement of teeth and at least one yaw drive unit arranged at a support structure and comprising a gear unit and a connected rotatable pinion arranged to engage with the teeth of the yaw ring.

As commonly known, a wind turbine is used to generate electric power to be fed into an electricity grid. The wind turbine usually comprises a tower and a nacelle mounted on top of the tower. The nacelle is provided with a hub, to which several rotor blades are attached, which interact with the blowing wind, thereby rotating the hub, which in turn drives a generator for producing the electric power. The nacelle is rotatably arranged on top of the tower by means of a respective bearing arrangement. For rotating the nacelle for changing its spatial orientation, a yaw assembly is arranged at the interface between the nacelle and the tower. This yaw assembly usually comprises a stationary yaw ring which is attached to the tower, which ring is provided with an annular arrangement of teeth. The yaw assembly further comprises at least one, usually several yaw drive units comprising a motor and a gear unit and a pinion connected to and rotated by the gear unit. The pinion comprises respective teeth, which engage in the teeth of the yaw ring. The yaw drive unit is arranged at the nacelle, so that it moves with the nacelle relative to the yaw ring assembly respectively the tower. This setup is commonly known.

In known arrangements, the pinion is arranged with its upper end in the gear unit housing and extends with its toothing out of the gear unit housing. For supporting the pinion, a bearing arrangement is provided, which supports the pinion at its upper end towards the gear unit housing, which in turn is fixed to a bedframe carrying the nacelle, which bedframe is the interface device by which the nacelle is attached to the tower. This setup of a yaw assembly allows for an acceptable rotation of the nacelle relative to the tower. Nevertheless, due to the high loads which need to be moved by the yaw assembly, which exert high loads on the toothing connection of the pinion and the yaw ring, a pinion may slightly deflect relative to the yaw ring, thereby exerting a tilting moment respectively load on the bearing arrangement by which the pinion is supported towards the gear unit housing. Further the tooth engagement between the pinion toothing and the yaw ring toothing slightly changes, resulting in a misaligned tooth contact, which negatively influences the drive and enhances the wear. To cope with this problem, large bearings are used in combination with a pinion comprising a pinion shaft with a respectively large diameter in order to realize a stiff support of this cantilever pinion arrangement.

It is therefore an object of the invention to provide an improved wind turbine yaw assembly.

For addressing this object a wind turbine yaw assembly as depicted above is characterized in that the support structure is provided with a receptacle for housing the pinion, wherein the pinion arranged in the receptacle is supported at the upper and at the lower end by at least two separate bearings arranged in distanced bearing planes towards the support structure.

According to the invention, the pinion is no longer supported only at its upper end, but both at the upper and the lower end of the shaft respectively above and below the toothing of the pinion. Further the pinion is supported towards the support structure, but not towards the gear unit housing, so that any loads are transferred or taken by the bedframe, which, as mentioned, is the respective interface device carrying the nacelle. So, the bearing support is taken out of the gear unit housing and arranged in the area of the support structure, which arrangement in turn provides a number of advantages. Due to the arrangement of the bearings at the upper and the lower end of the shaft, no deflections will occur, as the pinion is perfectly supported into respective bearing planes. This allows for using smaller bearings and for reducing the diameter of the pinion shaft. Further the pinion is supported towards a very stiff and heavy component, i.e. the bedframe, to which any load is transferred, so that a very stable yaw assembly is realized. Further, as no deflections can occur and as any loads are perfectly supported, no misalignment of the toothing engagement may occur, resulting in a perfect tooth contact, which in turn allows for a perfect drive.

The support structure may be a bedframe carrying the nacelle, but also any other structure capable of carrying or receiving the drive arrangement comprising the yaw drive unit, the associated gear unit and the associated drive motor, wherein usually more than only one such drive arrangement is provided at the support structure. The support structure may in alternative to the bedframe be for example a plate-like device like a bed plate or a yaw plate, wherein this enumeration is not limiting.

To realize the respective bearing planes, in which the pinion is supported towards the support structure like the bedframe or the like, the support structure is provided with a receptacle, in which the pinion is received, and in which the pinion is supported by the separate bearings arranged in the distanced bearing planes. This receptacle, which may be realized in various embodiments described in detail later, houses the pinion to a certain extent, but in any way provides the respective bearing supports.

These bearing supports may be realized by means of an upper and a lower bearing structure, which are assigned to the receptacle, wherein the pinion is supported towards the upper and the lower bearing structure by means of the separate bearings. This bearing structure is a respective support structure, to which the respective bearing is attached respectively where the bearing rests. This bearing structure may be of various shape respectively cross section, depending on where it is provided, and on the setup of the bearing respectively the bearing interface attached to the bearing structure.

The receptacle itself is preferably provided with an upper and a lower opening, into which openings a shaft of the pinion engages, which shaft is supported by the respective bearing. The receptacle is open to the top, i.e. towards the gear unit, to which the pinion shaft is coupled, which pinion shaft engages into this upper opening. A lower opening, into which the lower end of the pinion shaft engages, allows for the simple arrangement of the lower bearing assembly.

As already mentioned, the receptacle provided at the support structure may be realized in various embodiments. According to a first embodiment, the receptacle is realized as a cast-in structure of the support structure. The receptacle therefore is a one-piece structure of the support structure like the bedframe or the bedplate etc., which is a casted device. The receptacle is directly casted as a support structure part, when the support structure is casted and is therefore made of the same material as the support structure.

This cast-in embodiment may further be characterized in that the upper and/or the lower bearing structures are realized as cast-in structures of the support structure. So not only the receptacle itself is a one-piece device of the support structure, but also the upper or the lower bearing structure. Preferably both the upper and the lower bearing structures, which are assigned to the receptacle, are realized as direct cast-in components of the support structure. Therefore, the bearings supporting the pinion shaft are directly supported at the support structure respectively the cast-in support structure bearing structures assigned to the cast-in receptacle. In an alternative it is possible that the upper and/or the lower bearing structures are provided at an intermediate bearing support element fixated at the support structure. In this embodiment, although the receptacle housing the pinion is a cast-in or one-piece device of the support structure, the assigned upper and/or lower bearing structures are realized at a specifically designed intermediate bearing support element, preferably a kind of bearing support ring, which is firmly attached to the support structure respectively the receptacle device. This intermediate bearing support element is equipped with a respective upper or lower bearing structure specifically designed for supporting the respective bearing. The receptacle itself respectively the support structure only needs to be provided with respective fixation means at which the intermediate bearing support element may be fixated.

The cast-in receptacle itself may comprise a plate-like receptacle bottom wall which is connected to a support structure base device by receptacle side walls. The cast-in receptacle comprises a horizontal bottom wall, which preferably comprises the directly cast-in lower bearing structure. This bottom wall is connected to a support structure base device, which builds the central or major part of the support structure, and which is provided with the upper bearing structure, by vertical side walls. As mentioned, the support structure may be a bedframe, a bed plate, a yaw plate or the like, all of which are larger items which may be one-piece-items or which may be built from two or more items fixated to each other. In any way, the receptacle side walls connect to the base device as a one-piece cast-in part and is therefor an integral part of this device base, which, as mentioned, may either build the main part of the support structure like the bedframe or even be the support structure like the bedframe itself, or which may be a part of the multi-part support structure. So the receptacle houses the pinion laterally by two side walls, but is open to the inner side respectively the yaw ring, and to the outer side allowing for a simple visual inspection of the two inner receptacle arrangement.

The side walls preferably extend vertically, so that, as mostly common, several yaw drive units may be arranged closely side by side.

In an alternative embodiment, the receptacle may also be realized by a plate-like receptacle bottom wall, which is connected to a support structure base device by means of several bolt connections. In this embodiment, a separate receptacle bottom wall in form of a simple plate is provided, which plate-like bottom wall is preferably directly equipped with the lower bearing support structure. This bottom plate is fixated to the support structure base device by means of several bolt connections, which support structure base device was already described above. The support structure base device is equipped with the respective upper bearing structure, so that again the respective double-sided bearing support of the shaft can be simply realized. As the plate-like bottom wall is firmly fixated to the support structure base device, the shaft is perfectly supported also with its upper end via the respective bearing assembly towards the support structure. The setup of this embodiment is very simple, as only the respective plate-like bottom wall needs to be provided and a respective number of bolt connections, while the support structure base device only needs to be provided with respective threaded bores or the like in order to fixate the bolt connections.

Preferably, the bolt connections are positioned in an arcuated arrangement, so that they extend closely respectively only with a small gap around the pinion, certainly again leaving an opening at the back side towards the yaw ring. Certainly, also an opening open to the front side allowing for a simple visual inspection may be provided by simply skipping one or two of these bolt connections.

For fixating the plate-like receptacle bottom wall, the support structure base device, as already defined and mentioned, may be provided with several threaded bores, into which the respective threaded bolts are screwed, wherein the plate-like bottom wall is provided with a respective number of through holes through which an end of the respective bolts extends, which bolts are then finally fixated by respective nuts screwed on the bolt ends.

According to a third embodiment, the inventive yaw assembly may comprise a casing, which at last partially encases the pinion and which casing comprises the receptacle bottom wall, wherein the casing is fixated to a bedframe base device, wherein the housing is provided with only one opening open to the yaw ring, or with a first opening open to the yaw ring and a second opening open to the opposite side. According to this embodiment, unlike at the cast-in receptacle, the receptacle is realized by means of a separate casing, which houses the pinion, and which casing is attached to the bedframe base device already described above respectively the bottom of this device. This separate casing comprises a receptacle bottom wall and either one or two side walls, which are attached to the support structure base device. The encasing has therefore a pot-like or U-like form or cross section, having at least one opening open towards the yaw ring, or also a second opening open to the front. The bottom receptacle wall of this casing is preferably directly provided with a respective bearing support structure, wherein the support structure base device is provided with the upper bearing support structure.

For attaching the casing to the support structure base device, the support structure base device is preferably provided with several through bores and the casing is provided with several threaded bores or holes, into which screws extending through the bores are screwed. Here the casing is fixated to the support structure base device from the top, simply by using some screws, which extend through respective bores of the support structure base device and which are screwed into the threaded bores of the casing. These threaded bores may either be provided directly in the front face of the respective casing wall, or at a flange extending to the side of the casing wall.

In an alternative, the casing is provided with through bores and the support structure base device is provided with threaded holes, into which screws extending through the through bores are screwed.

In a further embodiment the gear unit may comprise a mounting flange, which is fixated to the support structure by several screws, which are either screwed in separate threaded bores provided at the support structure base device, or which are screwed in the threaded bores of the support structure base device into which the respective threaded bolts are screwed, or which extend through bores provided in the support structure base device and are screwed in the threaded bores of the casing. So not only the receptacle may be attached to the support structure in various ways, but also the gear unit may be mounted in different ways.

The above mentioned three embodiments all comprise a receptacle, which is itself either provided as a one-piece item in form of a cast-in receptacle or housing, or in form of a separate receptacle fixed to the support structure, either in form of a simple plate-like bottom wall fixated by means of bolt connections, or in form of a casing comprising a bottom and side walls fixated to the support structure. In the two later discussed embodiments, the separate receptacle is fixated to the support structure separately from the gear unit, which is, as the receptacle is arranged at the bottom side of the support structure or bedframe base device, fixated at the upper side of the bedframe or bedframe base device and connected to the pinion arranged in the receptacle by means of a respective coupling.

A fourth embodiment of the invention proposes to build a separate unit comprising the gear unit and the receptacle, which separate unit is then mounted to the support structure, wherein the receptacle is attached to and supported to the support structure via this mounting, wherein the support structure also supports the respective pinion bearings, and the receptacle is firmly fixated to the support structure. This embodiment therefore proposes that the receptacle is realized by a pot-like casing laterally encasing the pinion except for an opening open to the yaw ring and having a mounting flange connected, directly or within an intermediate plate, to a mounting flange of the gear unit, wherein the casing and the gear unit are a pre-assembled device which is fixated to the support structure, like a bedframe, bed plate, yaw plate etc., by the flange arrangement bolted to the support structure. The pot-like casing and the housing of the gear unit both have respective mounting flanges, which are either directly connected, or indirectly, in case an intermediate plate, which is used for pre-tensioning the bearing, is sandwiched between the two mounting flanges. In any way, this mounting flange arrangement is then firmly fixated respectively bolted to the support structure, thereby firmly attaching the receptacle respectively the casing to the support structure. The casing preferably has a semi-circular cross section, thereby having only one opening open towards the yaw ring. The pinion is otherwise completely housed. In an alternative, it is also possible to provide a front opening.

The support structure or the support structure base device may further comprise a recess in which the gear unit with a mounting flange is arranged and fixated to the support structure or support structure base member by means of screw or bolt connections. As the gear unit is arranged in a recess, the support structure or support structure base member is somehow thinner in this region, so that also the pinion shaft may be shorter, which positively supports the bearing support towards the support structure.

Although only one drive unit may be provided, usually several separate drive units are arranged, respectively several pinions with associated gear units and motors are provided, which are positioned side by side in an arcuate arrangement, due to the ring-form of the yaw ring.

Finally, the invention further refers to a wind turbine, comprising a tower and a nacelle with a support structure connected to the tower and a yaw assembly as depicted above.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principle sketch of a wind turbine,
- Fig. 2: a partial perspective view of the nacelle comprising a bedframe and a yaw assembly according to the invention comprising receptacles realized as cast-in structures,
- Fig. 3: a side view of a receptacle with the received pin-ion and the gear unit,
- Fig. 4: a cross sectional view of the arrangement of fig. 3,
- Fig. 5: a side view of a second embodiment of a cast-in receptacle with the received pinion and the gear unit,
- Fig. 6: a cross section view of the arrangement of fig. 5,
- Fig. 7: a partial perspective view of the nacelle and the bedframe with three variations of inventive receptacle-setups additionally attached to the bedframe,

- Fig. 8: a cross section view of the embodiment marked with "A" in fig. 7,
- Fig. 9: a cross section view of the embodiment marked with "B" of fig. 7,
- Fig. 10: a cross section view of the embodiment marked with "C" in fig. 7,
- Fig. 11: an exploded illustration of the arrangement of the yaw assembly shown in fig. 10, and
- Fig. 12: the arrangement of fig. 11 in the assembled condition.

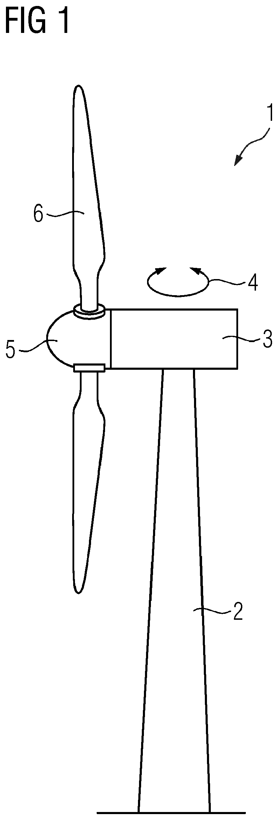

Fig. 1 shows a principle illustration of a wind turbine 1, comprising a tower 2 and a nacelle 3 arranged on top of the tower 2. The nacelle 3 is rotatable relative to the tower 2 as shown by the arrow 4, the rotation axis is vertical. Furthermore, the nacelle 3 comprises a hub 5, to which several, usually three rotor blades 6 are attached, which interact with blowing wind. This results in a rotation of the hub 5, which is coupled to a generator for generating electricity, as commonly known.

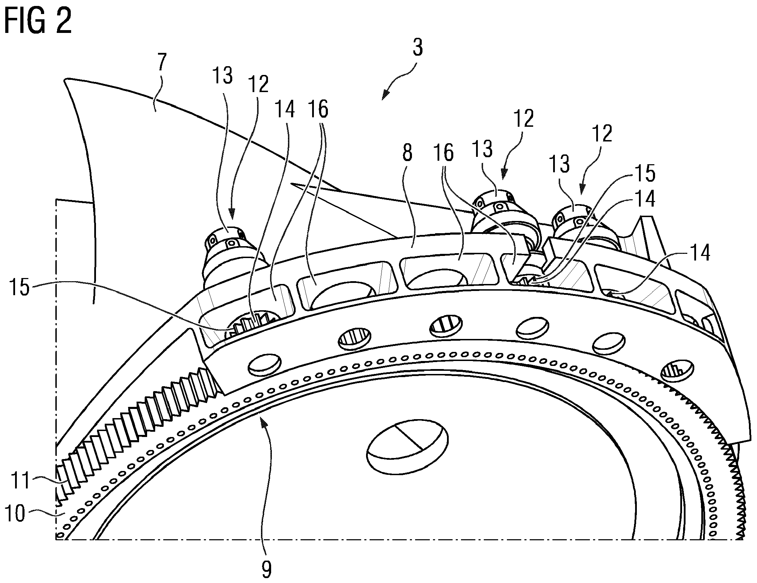

The perspective partial view of fig. 2 shows a part of the nacelle 3, with the nacelle housing 7, which is attached to a support structure 8 here in form of a bedframe, by which the nacelle 3 is attached via a respective bearing to the tower, which is not shown in detail.

In the figures, a bedframe is shown and described as being the support structure. As already mentioned, the support structure may also be another device capable or adapted to carry or receive the yaw unit with its associated gear unit and the drive motor. The term "bedframe" used throughout the following detailed description and denoted with the reference number 8 is therefor also descriptive for other support structures as mentioned above and only used as an example for the detailed description of the invention. The same is true for the "bedframe base device 35", which is also only an example for the "support structure base device".

For a controlled rotation of the nacelle 3 relative to the tower 2 a wind turbine yaw assembly 9 is provided. This yaw assembly 9 comprises a yaw ring 10 with an annular arrangement of teeth 11. The yaw ring is firmly attached to the tower 2 and thus stationary.

The yaw ring assembly furthermore comprises at least one, in this embodiment several yaw drive units 12 arranged at the nacelle 3 respectively the bedframe 8. Each yaw drive unit 12 comprises a gear unit 13 coupled to a drive motor, which is not shown in this embodiment. It furthermore comprises a pinion 14 coupled to the gear unit. The pinion 14 comprises teeth 15, which engage with the teeth 10 of the yaw ring 10. By rotating the pinions 14 the bedframe 8 and thus the nacelle 3 rotates along the yaw ring 10 and thus relative to the tower 2.

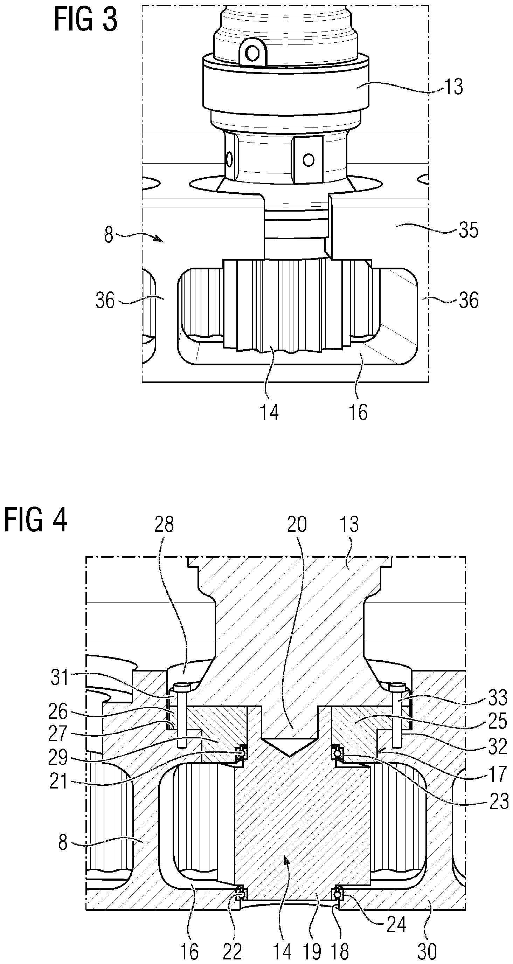

As fig. 2 shows, the bedframe is provided with a number of receptacles 16, which are cast-in structures and which are therefore an integral or one-piece part of the bedframe 8. The receptacles 16, which are arranged in an arcuate form at the bedframe 8, each receive a pinion 14, as shown in more detail in figures 3 and 4. While the respective pinion 14 is received in the respective receptacle 16, the gear unit 13 and the not shown motor drive is arranged on top of the bedframe 8 respectively of the receptacle 16 and is coupled with the pinion 14.

Figures 3 and 4 show a first embodiment of such a cast-in setup. As shown, the pinion 14 is received in the receptacle 16. The cast-in receptacle comprises a plate-like receptacle bottom wall 30 which is, as already mentioned, provided with the respective lower opening 18, and two vertical side walls 36 connecting the bottom wall to the bedframe 8 respectively a bedframe base device 35. The receptacle 16 is provided with an upper opening 17 and a lower opening 18. The pinion 14 comprises a shaft 19, which engages into each of these openings 17, 18. The upper end of the shaft 19 is coupled to a drive shaft 20 of the gear unit 13, as shown in fig. 4. The lower end of the shaft 19 engages into the lower opening 18.

As especially fig. 4 shows, the pinion is completely supported outside of the gear unit 13 by two separate bearings 21, 22 towards the bedframe 8. To realize this rotative support, an upper bearing structure 23 and a lower bearing structure 24 are provided. The upper bearing structure 23 is provided at an intermediate bearing support element 25 in form of a support ring, which comprises a radial flange 26 arranged vertically on top of the recess bottom 27 of a recess 28, into which the gear unit 13 is arranged. A cylindrical axial flange 29 of the intermediate support element bearing engages into the upper opening 17 and is provided with a respective groove-like upper bearing structure 17, at or in which the upper bearing 21 is arranged.

The lower bearing 22 is arranged in a lower bearing support structure 24, which is directly provided at a bottom wall 30 of the receptacle, and is thus integral with the bedframe.

This embodiment allows for supporting the pinion 14 both at the upper and lower end of its shaft 19, so that the pinion 14 itself is perfectly supported and does not deflect in any way. Further the support is realized towards the bedframe 8, which allows to transfer also high loads.

For fixating this arrangement, the housing of the gear unit 13 comprises a radial flange 31. This radial flange 31 and the radial flange 26 of the intermediate bearing support element 25 comprise through holes, which flush in this arrangement, and which are flush with respective threaded bores 32 provided at the bedframe. The fixation is realized by respective fixation screws 33 which extend through the through holes and which are tightly screwed into the threaded bore 32.

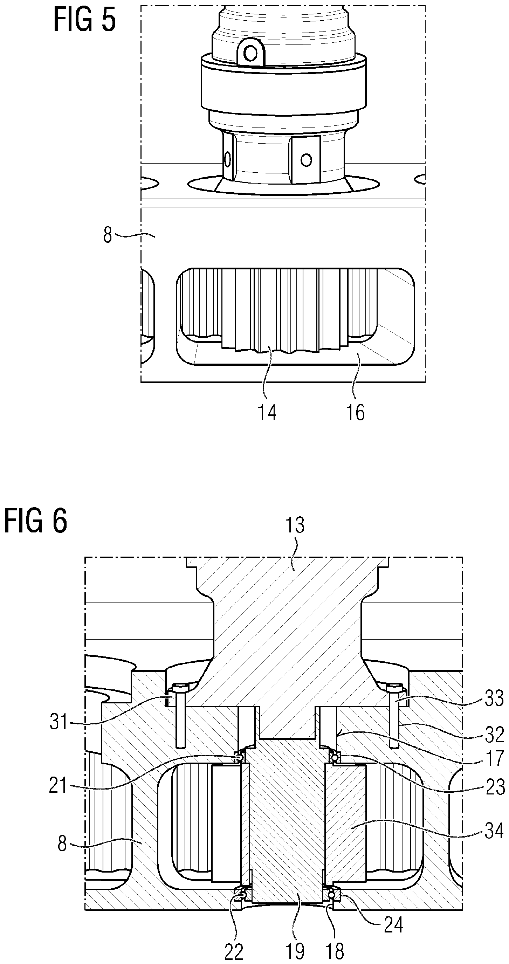

Another alternative compared to the one shown in figures 3 and 4 is shown in figures 5 and 6. For similar items similar reference numbers are used.

In this embodiment the receptacle 16 is closed on all four sides, compared to the embodiment of fig. 3. Again, the pinion 14 is received in the receptacle 16. In this embodiment, the pinion 14 comprises a separate shaft 19, onto which a hollow pinion sleeve 34 comprising the teeth 15 is arranged. Both the shaft and the hollow pinion sleeve 34 have a respective longitudinal toothing, so that they firmly engage.

The shaft 19 is arranged with its upper end in the upper opening 17 and is coupled to the gear unit 13, while the lower end of the shaft 19 engages into the lower opening 18.

Also in this embodiment the upper and the lower end of the shaft 19 are supported to the bedframe 8 outside the gear unit housing, and both the upper bearing 21 and the lower bearing 22 are directly supported towards the bedframe 8. The bedframe 8 is provided with the upper bearing structure 23 and the lower bearing structure 24, both being integrally formed or casted at the bedframe 8. So also in this embodiment a perfect support providing any kind of deflection is realized.

As in this embodiment no intermediate bearing element is used, the radial flange 31 of the gear unit 13, which may also be named as a gear box, is directly screwed onto the bedframe 8 by means of respective screws 33, which are screwed into the respective threaded bores 32 of the bedframe 8 .

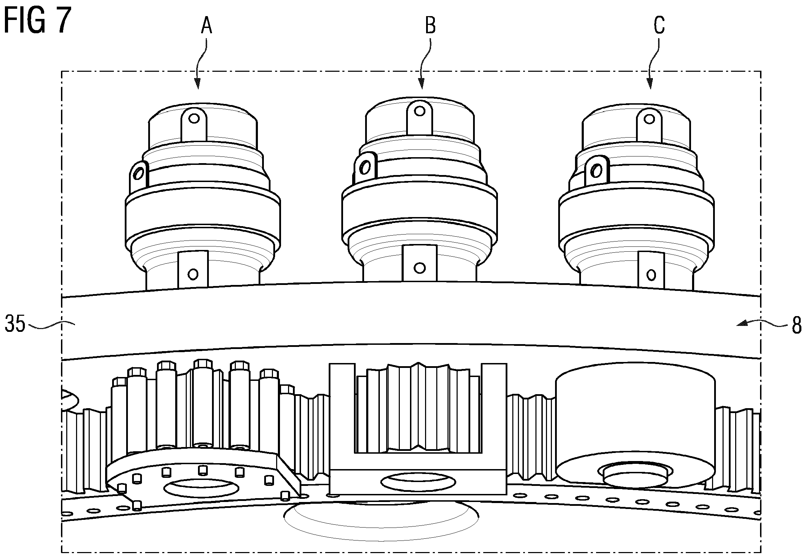

Fig. 7 shows an exemplary arrangement of three different embodiments of receptacle setups, which are not cast-in receptacles but which are separate items and which are fixated to the bedframe 8 respectively a respective bedframe base device 35. The various embodiments are marked with "A", "B" and "C". In reality, not all three of these variations are realized at the bedframe, but only one of them. The combined illustration is only for illustrative purpose.

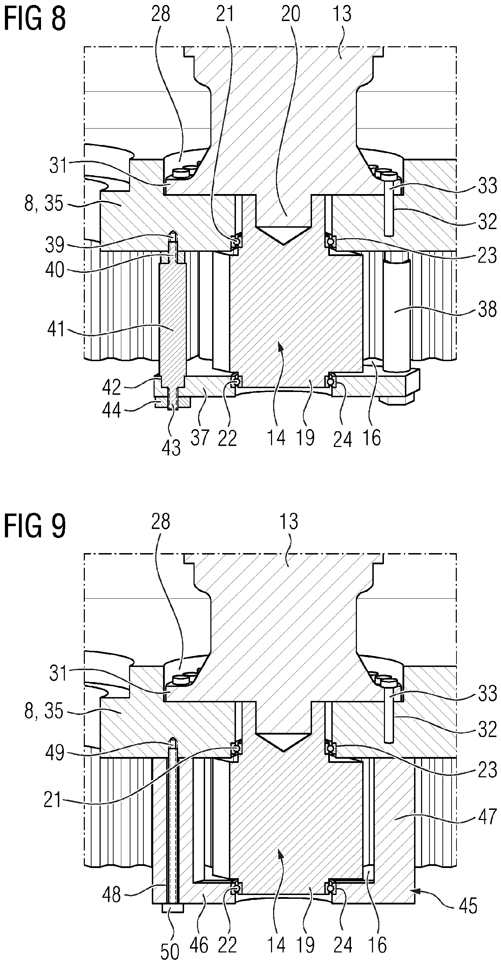

Fig. 8 shows a cross section view of the first alternative "A" of fig. 7. The recess 16 is realized by a plate-like receptacle bottom wall 37, which is a separate item, and which is connected to the bedframe base device 35 by means of several bolt connections 38. The bedframe base device 35 comprises a number of threaded bores 39, into which threaded ends 40 of the respective bolt 41 are screwed. On the other hand the receptacle bottom wall 37 is provided with a number of through holes 42, into which the lower end of the respective bolt 41 engages. Onto the threaded end 43 a respective nut 44 is screwed for tightly fixating the bottom wall 37.

In this embodiment the pinion 14 is again supported by an upper bearing 21 and a lower bearing 22 towards the bedframe 8. The bedframe base device is provided with the upper support structure 23, which in this embodiment is a cast-in structure. In this upper bearing structure 23 the upper bearing 21 is arranged, which receives the upper end 19 of the pinion 14. The lower bearing structure 24 is provided at the bottom wall 37, which may also be a casted item. In this lower bearing structure 24 the lower bearing 22 is received, which receives the lower end of the shaft 19.

As shown, the pinion 14 is certainly coupled to the drive shaft 20 of the gear unit 13. The gear unit 13 is again received in a respective recess 28 and comprises a radial flange 31 with a number of through holes, through which respective fixation screws 33 extend, which are screwed into respective threaded bores 32 provided at the bedframe 8.

Also this embodiment allows for a very stiff and stable and non-deflecting support of the pinion 14 towards the bedframe 8.

The embodiment of fig. 9 shows another setup of the receptacle 16. This receptacle 16 is realized by a casing 45, which in the embodiment "B" has a U-shaped cross section comprising a plate-like bottom wall 46 and two vertical side walls 47. The side walls 47 are provided with respective through holes 48, which are flush with threaded bores 49 provided at the bedframe 8 respectively the bedframe base device 35. For fixating this casing 45 respective screws 50 are pushed through the through holes 48 and are screwed into the threaded bores 49. The casing 45 is provided with a back and a front opening.

The pinion 14, which is coupled to the gear unit 13 at its upper end, is supported towards the bedframe 8 again by an upper bearing 21 and a lower bearing 22. The upper bearing 21 receives the upper end of the shaft 19, the lower bearing 22 receives the lower end of the shaft 19. Again, the bedframe base device is provided with an integral upper bearing structure 23 receiving the upper bearing 21, while the bottom wall 46 of the casing 45 is integrally provided with the lower bearing structure 24 receiving the lower bearing 22.

The gear unit 13 received in the recess 28 is again fixed by its flange 31 and respective screws 33, which are screwed into respective threaded bores 32 provided at the bedframe base device 35 to the bedframe 8.

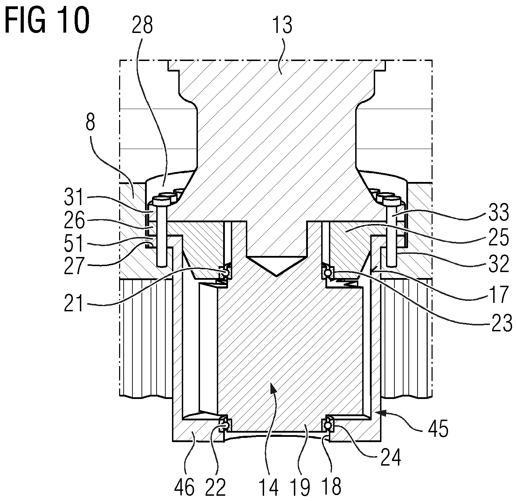

Finally, figures 10 to 12 show in detail the embodiment "C" of fig. 7 This embodiment comprises a casing 45, which is pot-like and therefore closed except for a lateral opening 58 which is open to the bedframe 8 respectively the yaw ring 10. The pot-like casing 45, which may also be named as a housing, receives the pinion 14, which again engages the respective upper opening 17 and the lower opening 18 of the casing 45. The lower bearing 22 is received at a lower bearing structure 24 integrally realized at the bottom wall 46 of the casing 45. The upper bearing 21 is received at the upper bearing structure 23, which in this embodiment is again realized at an intermediate bearing support element 25 realized as a support ring. This intermediate bearing support element 25 is used for pre-tensioning the bearing arrangement.

As fig. 10 shows, the casing 45 comprises a radial flange 51. Also the intermediate bearing support element 25 comprises a radial flange 26, while also the housing of the gear unit 13 comprises a radial flange 31. All flanges 31, 26 and 51 are arranged on top of each other and are provided with respective through holes respectively threaded bores in the radial flange 51 of the casing 45. This allows for pre-assembling the whole arrangement before it is inserted into the respective opening 52 realized in the bedframe 8.

After inserting the pre-assembled arrangement, the flange arrangement respectively the lowest of these flanges, the flange 51, rests on the bottom surface 27 of the recess 28, which bottom surface 27 is provided with a number of threaded bores 32, into which the respective fixation screws 33 are screwed. The fixation screws 33 engage through flushing through holes provided in all three flanges 31, 26 and 51, so that by means of these mounting screws 35 at the pre-assembled arrangement may be firmly fixed to the bedframe 8.

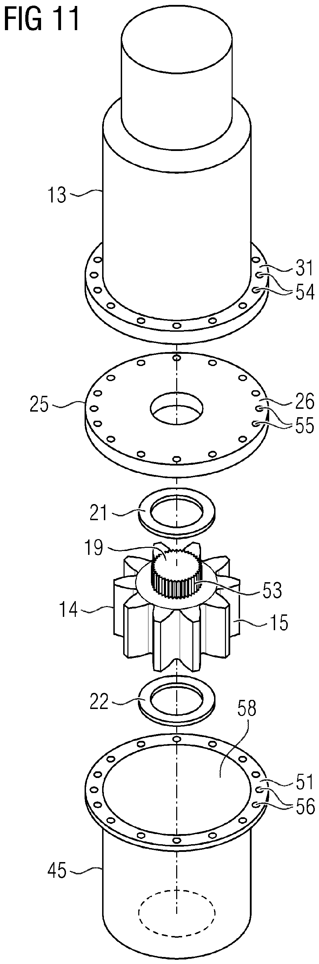

The exploded view of fig. 11 shows the respective items of this pre-assembled arrangement. It shows the pot-like casing 45 followed by the lower bearing 22. It also shows the pinion 14 with its teeth 15 and the upper end of the shaft 19, which is provided with teeth 53 for connecting it to the gear unit, which are in this embodiment shown as an outer toothing, wherein it may certainly also be an inner toothing as needed for the previously discussed embodiments.

The pinion 14 is followed by the upper bearing 21 and the intermediate bearing support element 25 supporting and pre-tensioning the bearing 21 respectively the whole pinion arrangement.

Finally, the gear unit 13 is shown.

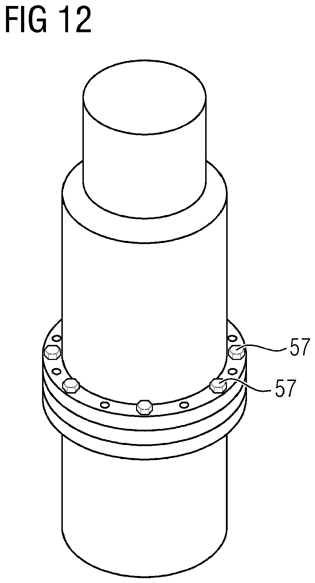

Also shown are the respective flanges 51 of the casing 45, the flange 26 of the intermediate bearing support element 25 and the radial flange 31 of the housing of the gear unit 13. The flanges 31 and 26 are provided with respective through holes 54, 55, while the flange 51 is provided with threaded bores 46. The mounting screws, which are used for pre-assembling this arrangement, are pushed through the through holes 54 and 55 and are firmly screwed into the threaded bores 55. The final pre-assembled device with the respective mounting screws 57 is shown in fig. 12. This pre-assembled device is then inserted into the respective opening 52 of the bedframe 8 as shown in fig. 10 and fixated to the bedframe 8 by means of the fixation screws 33, which are inserted into the free openings of the respective flange arrangement, which openings are shown in fig. 12.

Due to the firm fixation of this pre-assembled device to the bedframe 8, also in this embodiment the pinion 14 is firmly supported to the bedframe 8 outside of the housing of the gear unit 13. It is further supported at its upper and lower shaft ends, so that no deflections may occur.

Although the present invention has been described in detail with reference to the preferred embodiment, the present invention is not limited by the disclosed examples from which the skilled person is able to derive other variations without departing from the scope of the invention.

## Claims

1. Wind turbine yaw assembly arranged at an interface between a nacelle (3) and a tower (2) of a wind turbine (1), comprising a yaw ring (10) with an annular arrangement of teeth (11) and at least one yaw drive unit (12) arranged at a support structure (8) and comprising a gear unit (13) and a connected rotatable pinion (14) arranged to engage with the teeth (11) of the yaw ring (10), **characterized in that** the support structure (8) is provided with a receptacle (16) for housing the pinion (14), wherein the pinion (14) arranged in the receptacle (16) is supported at the upper and at the lower end by at least two separate bearings (21, 22) arranged in distanced bearing planes towards the support structure (8).

2. Wind turbine yaw assembly according to claim 1, **characterized in that** an upper and a lower bearing structure (23, 24) are assigned to the receptacle (16), wherein the pinion (14) is supported towards the upper and the lower bearing structure (23, 24) by means of the separate bearings (21, 22) .

3. Wind turbine yaw assembly according to claim 1 or 2, **characterized in that** the receptacle (16) is provided with an upper and a lower opening (17, 18), into which openings a shaft (19) of the pinion (14) engages, which shaft (19) is supported by the respective bearing (21, 22).

4. Wind turbine yaw assembly according to one of the preceding claims, **characterized in that** receptacle (16) is realized as a cast-in structure of the support structure (8).

5. Wind turbine according to claim 4, **characterized in that** the upper and/or the lower bearing structures (23, 24) are realized as cast-in structures of the support structure (8), or that the upper and/or the lower bearing structure (23, 24) are provided at an intermediate bearing support element (25) fixated at the support structure (8).

6. Wind turbine yaw assembly according to claim 4 or 5, **characterized in that** a plate-like receptacle bottom wall (30) is connected to a support structure base device (35) by receptacle side walls (36).

7. Wind turbine yaw assembly according to one of the claims 1 to 3, **characterized in that** a plate-like receptacle bottom wall (37) is connected to a support structure base device (35) by means of several bolt connections (38).

8. Wind turbine yaw assembly according to claim 6, **characterized in that** the bolt connections (38) are positioned in an arcuated arrangement.

9. Wind turbine yaw assembly according to claim 7 or 8, **characterized in that** the support structure base device (35) is provided with several threaded bores (39) into which the respective threaded bolts (39, 41) are screwed, and that the plate-like bottom wall (37) is provided with a respective number of through holes (42) through which an end of the respective bolts (41) extends which are fixated by respective nuts (44) screwed on the bolt ends.

10. Wind turbine yaw assembly according to one of the claims 1 to 3, **characterized in that** a casing (45), which at least partially encases the pinion (14) and which casing (45) comprises the receptacle bottom wall (46), is fixated to a support structure base device (35), wherein the casing (45) is provided with only one opening (51) open to the yaw ring (10), or with a first opening open to the yaw ring (10) and a second opening open to the opposite side.

11. Wind turbine yaw assembly according to claim 10, **characterized in that** the support structure base device (35) is provided with several through bores and the casing is provided with several threaded holes, into which screws extending through the bores are screwed, or that the casing (45) is provided with through bores (48) and the support structure base device is provided with threaded holes (49), into which screws (50) extending through the through bores (48) are screwed.

12. Wind turbine yaw assembly according to claim 9 or 11, **characterized in that** the gear unit (13) comprises a mounting flange (31) which is fixated to the support structure (8) by several screws (33), which are
- either screwed in separate threaded bores (32) provided at the support structure (8) or the support structure base device (35),
- or which are screwed in the threaded bores of the support structure base device into which the respective threaded bolts (41) are screwed,
- or which extend through bores provided in the support structure (8) or the support structure base device (35) and are screwed in the threaded bores of the casing (45) .

13. Wind turbine yaw assembly according to one of the claims 1 to 3, **characterized in that** the receptacle (16) is realized by a pot-like casing (45) laterally encasing the pinion (14) except for an opening (51) open to the yaw ring (10) and having a mounting flange (51) connected, directly or with an intermediate bearing support element (25), to a mounting flange (31) of the gear unit (13), wherein the casing (45) and the gear unit (13) are a preassembled device which is fixated to the support structure (8) by the flange arrangement bolted to the support structure (8).

14. Wind turbine yaw assembly according to one of the preceding claims, **characterized in that** the support structure (8) or the support structure base device (35) comprises a recess (28) in which the gear unit (13) with a mounting flange (31) is arranged and fixated to the support structure (8) or support structure base member (35) by means of screw or bolt connections.

15. Wind turbine yaw assembly according to one of the preceding claims, **characterized in that** several pinions (14) with associated gear units (13) are provided, which are positioned side by side in an arcuate arrangement.

16. Wind turbine, comprising a tower and a nacelle with a support structure (8) connected to the tower (2) and a wind turbine yaw assembly (9) according to one of the preceding claims.
